# EUROPÄISCHE PATENTSCHRIFT

(11) **EP 3 684 645 B1**
(45) Veröffentlichungstag und Bekanntmachung des Hinweises auf die Patenterteilung: **22.03.2023**
(21) Anmeldenummer: 18815572.5
(22) Anmeldetag: 29.11.2018
(51) Int. Cl.: B60Q 1/14, G08G 1/16, G06V 20/56

(54) **VERKÜRZUNG VON LICHTFÜHRUNGSFUNKTIONEN**
SHORTENING OF LIGHT GUIDING FUNCTIONS
RACCOURCISSEMENT DE FONCTIONS D'ÉCLAIRAGE

(30) Priorität: 20.12.2017 DE 102017223434
(43) Veröffentlichungstag der Anmeldung: 29.07.2020
(73) Patentinhaber: Audi AG, 85045 Ingolstadt (DE)
(72) Erfinder: OMERBEGOVIC, Said, 60311 Frankfurt am Main (DE); REIM, Johannes, 85072 Eichstätt (DE)
(74) Vertreter: Hofstetter, Schurack & Partner
(86) Internationale Anmeldenummer: PCT/EP2018/083027
(87) Internationale Veröffentlichungsnummer: WO 2019/120930

(56) Entgegenhaltungen:
- EP-A1- 1 659 029
- EP-A1- 2 896 937
- EP-A2- 1 862 989
- WO-A1-2016/015827
- WO-A1-2017/119557
- WO-A1-2018/162219
- DE-A1-102009 009 473
- DE-A1-102013 217 057
- DE-T5-112014 006 919
- JP-A- 2008 045 870

## Beschreibung

Die vorliegende Erfindung betrifft ein Beleuchtungssystem für ein Kraftfahrzeug zum Beleuchten eines Fahrbahnabschnitts.

Derzeitige Lichtführungsfunktionen, wie zum Beispiel ein Baustellenlicht oder ein Spurlicht, die durch hochauflösende Scheinwerfer realisiert werden können, beleuchten einen Bereich auf der Fahrbahn vor dem Fahrzeug. Der ausgeleuchtete Bereich vor dem Fahrzeug hat nach Kenntnis der Anmelderin dabei eine konstante Länge. Weisen die Lichtführungsfunktionen stets eine konstante Länge auf, können andere Verkehrsteilnehmer, welche in diesen beleuchteten Bereich geraten, eventuell irritiert werden.

Die Offenlegungsschrift DE 10 2015 012 022 A1 beschreibt ein Verfahren zur Beleuchtung eines vorderen Fahrzeugumfelds. Dazu wird zur Ausleuchtung eine Beleuchtungseinrichtung mit einer Steuereinrichtung und wenigstens einem Scheinwerfer verwendet. Der Scheinwerfer kann mehrere zusammenhängende Raumwinkelsegmente ausleuchten. Für jedes der Raumwinkelsegmente kann die Leuchthelligkeit separat durch die Steuereinrichtung eingestellt werden. Bei Erfüllung einer Aktivierungsbedingung der Scheinwerfer steuert die Steuereinrichtung die Scheinwerfer so an, dass zunächst ein vorgegebenes Initialmuster als Lichtmuster abgestrahlt wird. In mehreren zeitlich aufeinanderfolgenden Schritten wird das abgestrahlte Lichtmuster stufenweise von dem Initialmuster in ein Informationsmuster überführt.

Die Offenlegungsschrift DE 10 2007 054 048 A1 beschreibt ein Verfahren und eine Vorrichtung für eine Fahrlichtsteuerung eines Fahrzeugs. Dazu werden Bildinformationen wenigstens eines Objekts, welche eine Relativgeschwindigkeit des Objekts zu dem Fahrzeug beinhalten, erfasst. Dabei wird das wenigstens eine Objekt anhand dessen Relativgeschwindigkeit einem bestimmten Objekttyp zugeordnet. In Abhängigkeit von dem Objekttyp wird ein zu dem wenigstens einen Objekt korrespondierender Winkelbereich eines oder mehrerer Lichtkegel teilweise oder vollständig ausgespart.

Die Offenlegungsschrift DE 10 2017 202 457 A1 betrifft ein Verfahren zum Bereitstellen einer Fahrerunterstützung für einen Fahrer beim Führen eines Kraftfahrzeugs auf einem Verkehrsweg. Dabei wird das Kraftfahrzeug vom Fahrer zu einer Verzweigung des Verkehrswegs geführt. Dabei wird eine Verkehrsregelung in Bezug auf die Verzweigung ermittelt. In Abhängigkeit von der ermittelten Verkehrsregelung mittels eines Scheinwerfers des Kraftfahrzeugs in einem Bereich der Verzweigung wird eine für den Fahrer als visuelle Fahrerunterstützung sichtbare Haltelinie auf den Verkehrsweg projiziert.

Die Offenlegungsschrift DE 10 2009 009 473 A1 beschreibt ein Verfahren, bei dem andere Verkehrsteilnehmer im Umfeld des Fahrzeugs detektiert werden. Dabei wird analysiert, ob ein anderer Verkehrsteilnehmer eine Kollisionsgefahr für das Fahrzeug darstellt. Wenn ein anderer Verkehrsteilnehmer eine Kollisionsgefahr für das Fahrzeug darstellt, wird von dem Fahrzeug ein Lichtzeichen auf die Fahrbahn projiziert, welches den anderen Verkehrsteilnehmer auf die Kollisionsgefahr aufmerksam macht.

Die Druckschrift WO 2016/015827 A1 beschreibt ein Fahrerassistenzsystem, ein Kraftfahrzeug und ein Betriebsverfahren. Das Fahrerassistenzsystem weist eine Einrichtung zum Ermitteln einer Position des Kraftfahrzeugs auf, welches eine Steuerungseinrichtung umfasst. Anhand der Position des Kraftfahrzeugs und wenigstens einer Objektinformation einer digitalen Karte kann eine Beleuchtungseinrichtung angesteuert werden. Damit kann ein in der digitalen Karte verzeichnetes, sich im Umfeld des Kraftfahrzeugs befindliches Objekt mit Licht markiert werden. Es ist ebenfalls möglich, Fußgänger mit Licht zu markieren und so die Fußgänger zu beleuchten.

Die Veröffentlichung DE 11 2014 006 919 T5 beschreibt ein Fahrzeugprojektions-Steuersystem und Verfahren zum Steuern von Bildprojektionen. Eine Projektionssteuerung steuert eine Projektionsvorrichtung, um ein Bild auf einer Umgebung eines Eigenfahrzeugs zu projizieren. Mittels eines Verbindungspunktdetektors kann ein Verbindungspunkt zwischen einer Straße, auf der das Eigenfahrzeug fährt, und einer anderen Straße, die mit der Eigenfahrzeugstraße verbunden ist, detektiert werden. Mittels eines Überlappungsfahrflächendetektors kann eine Überlappungs-Fahrfläche am Verbindungspunkt detektiert werden. Die Überlappungs-Fahrfläche ist eine Fläche, die das Fahren sowohl eines anderen Fahrzeugs zum Befahren des Verbindungspunkts von einer Verbindungsstraße aus als auch des Eigenfahrzeugs gestattet. Durch die Projektionssteuerung kann ein Bild auf die Überlappungs-Fahrfläche projiziert werden.

Die US-Schrift US 2008/0175012 A1 betrifft eine alarmierende Beleuchtungsvorrichtung. Die alarmierende Beleuchtungsvorrichtung beinhaltet eine Erfassungseinheit, eine Einheit zum Einschätzen eines Gefahrenpotenzials, eine Beleuchtungseinheit sowie eine Kontrolleinheit. Ein Gefahrenpotenzial bezüglich einer von der Erfassungseinheit detektierten Person zu einem Kraftfahrzeug wird ermittelt. Die Kontrolleinheit beeinflusst im Fall einer angenommenen Gefahr für den Fußgänger die Beleuchtungseinheit. In diesem Fall zeigt eine Lichtverteilung auf einer Straßenoberfläche eine Richtung der Person an, welche in Gefahr gewägt wird und eine Entfernung zu der Person. Ein weiteres Beleuchtungssystem ist aus der DE 10 2014 226254 A1 bekannt.

Die vorliegende Erfindung stellt sich die Aufgabe, mögliche Irritationen anderer Verkehrsteilnehmer zu reduzieren, was zur Erhöhung der Verkehrssicherheit beitragen kann.

Diese Aufgabe wird gemäß den unabhängigen Patentansprüchen gelöst. Sinnvolle Weiterbildungen der Erfindung ergeben sich aus den Unteransprüchen.

Die vorliegende Erfindung sieht ein Beleuchtungssystem für ein Kraftfahrzeug zum Beleuchten eines Fahrbahnabschnitts vor. Das Beleuchtungssystem weist ein Informationssystem zum Bereitstellen oder Erfassen eines Haltepunkts auf. Ferner beinhaltet das Beleuchtungssystem eine Beleuchtungseinrichtung zum Projizieren einer berechneten Lichtverteilung auf den Fahrbahnabschnitt sowie eine Steuereinheit zum Berechnen der Lichtverteilung. Dabei ist die berechnete Lichtverteilung eine einteilige Fläche. Diese einteilige Fläche geht von einem vorgegebenen Startabschnitt aus, der einen bezogen auf das Kraftfahrzeug proximalen Leuchtabschnitt darstellt. Zugleich überschreitet die einteilige Fläche nicht den Haltepunkt. Das Informationssystem kann zum Beispiel verschiedene Sensoren beinhalten, welche eine Umgebung des Kraftfahrzeugs erfassen beziehungsweise abtasten können. Solche Sensoren können beispielsweise eine Kamera, ein Laserscanner, ein Radarsensor, ein Lidar-Sensor oder ein Ultraschallsensor sein. All diese Sensoren können Teil des Informationssystems sein. Mithilfe dieser Sensoren kann das Informationssystem aktuelle Daten für die Steuereinheit bereitstellen. Die Steuereinheit kann somit eine aktuelle Verkehrssituation, welche den Haltepunkt betrifft, erfassen und analysieren. Der vorgegebene Startabschnitt beginnt vorzugsweise in einem Bereich vor dem Kraftfahrzeug in normaler Fahrtrichtung auf der Fahrbahn, der bis zu 3 Meter vom Kraftfahrzeug entfernt sein kann. Somit beginnt der vorgegebene Startabschnitt der berechneten Lichtverteilung auf der Fahrbahn insbesondere nicht direkt am Kraftfahrzeug, sondern weist eine vorgegebene Entfernung zu dem Kraftfahrzeug auf. Diese Entfernung des Startabschnitts vom Kraftfahrzeug kann von der Geschwindigkeit des Kraftfahrzeugs sowie einem Fahrbahnverlauf abhängig sein.

Darüber hinaus weist das Informationssystem ein Navigationssystem aufweisen. Das Navigationssystem kann digitale Karten und/oder prädiktive Streckendaten beinhalten. Insbesondere kann durch das Navigationssystem ein Haltepunkt vorgegeben sein. So kann das Navigationssystem beispielsweise eine Kreuzung als Haltepunkt bereitstellen. Das Navigationssystem kann ferner weitere Arten von Haltepunkten vorgeben. So können beispielsweise Zebrastreifen oder Bahnübergänge ebenfalls als Haltepunkte in dem Navigationssystem abgespeichert sein, welches diese Haltepunkte der Steuereinheit übermittelt. Zudem können die in dem Informationssystem enthaltenen Sensoren und das Navigationssystem zusammenwirken, um einen Haltepunkt festzustellen beziehungsweise zu verifizieren. So kann beispielsweise eine Kreuzung mit einer Ampel nicht eindeutig als Haltepunkt festgelegt werden. Der betreffende Fahrbahnabschnitt ist abwechselnd als Vorfahrtsstraße beziehungsweise Haltepunkt ausgebildet. Bei einer grünen Ampel beispielsweise könnte kein Haltepunkt vorgesehen sein, bei einer roten Ampel wäre der Haltepunkt durch eine Haltelinie im Bereich der Ampel auf der Fahrbahn festgelegt.

Nähert sich beispielsweise das Kraftfahrzeug einer Kreuzung mit der Ampel, so kann die Existenz der Ampel der Steuereinheit bereits durch das Navigationssystem bekannt sein. Zusätzlich können die Sensoren des Informationssystems aktuell vor Ort feststellen, welchen Status die Ampel momentan aufweist. Zum Beispiel kann ein Kamerasystem feststellen, ob die Ampel auf Grün oder Rot steht. Damit können die Informationen des Navigationssystems sowie des Kamerasystems sinnvoll miteinander verknüpft werden. Sinnvollerweise würde bei einem Vorliegen einer Kreuzung sowie einer Ampel in Rotstellung ein Haltepunkt festgelegt. In dieser Situation würde die Lichtverteilung entsprechend so verkürzt, dass sie nicht über den Haltepunkt hinausragt.

Die Erfindung sieht vor, dass das Informationssystem eine Kamera zum Erfassen von Umgebungsdaten und ein Navigationssystem zum Bereitstellen von prädiktiven Streckendaten bezüglich des Haltepunkts aufweist. Prädiktive Streckendaten beinhalten insbesondere Fahrbahnabschnitte, welche das Kraftfahrzeug während einer Fahrt in einer näheren Zukunft erreichen wird. Dabei stellt diese nähere Zukunft insbesondere eine Zeitspanne von etwa 30 Sekunden dar. Die Zeitspanne kann jedoch auch länger oder kürzer sein. In der Regel sind mit prädiktiven Streckendaten nicht die aktuellen Umgebungsdaten des Kraftfahrzeugs gemeint. Aktuelle Umgebungsdaten des Kraftfahrzeugs können durch eine Kamera mit einer entsprechenden Bilderfassung sowie Bildauswertung erfasst und ausgewertet werden. Dabei können verschiedene Arten von Kameras zum Einsatz kommen. So kann die Kamera beispielsweise als monokulare Kamera, Stereokamera oder Fischaugenobjektivkamera ausgebildet sein. Die Kamera kann beispielsweise mittels eines optischen Flusses oder einer bewegungsbasierten Strukturerkennung als Bildverarbeitungsmethoden dynamische Objekte in der Umgebung des Kraftfahrzeugs erkennen. Mithilfe eines neuronalen faltenden Netzwerkes (englisch: convolutional neural network, CNN) kann anhand von mehreren Bildern, welche die Kamera aufnehmen kann, ein Objekttyp des erfassten Objektes bestimmt werden. Diese Informationen können entsprechend von der Steuereinheit für das Feststellen eines Haltepunkts beziehungsweise für das Berechnen der Lichtverteilung berücksichtigt werden.

Beispielsweise kann die Steuereinheit anhand mehrerer von der Kamera aufgenommener Bilder ein bewegliches Objekt detektieren. Dieses bewegliche Objekt könnte beispielsweise ein Wildtier sein, welches sich der Fahrbahn des Kraftfahrzeugs nähert. In dieser Situation kann es wichtig sein, einzuschätzen, ob das Wildtier die Fahrbahn des Kraftfahrzeugs betreten wird oder nicht. Entfernt sich das Wildtier von der Fahrbahn des Kraftfahrzeugs, so würde vorzugsweise kein Haltepunkt bestimmt werden. Würde sich jedoch das Wildtier kontinuierlich oder abrupt der Fahrbahn des Kraftfahrzeugs nähern, so könnte die Steuereinheit einen Haltepunkt bestimmen, der in Fahrtrichtung des Kraftfahrzeugs vor dem Wildtier liegt. Die Lichtverteilung würde in diesem Fall so angepasst werden, dass sie nicht über den Haltepunkt hinausragt. Dies führt idealerweise dazu, dass das Wildtier nicht unnötig geblendet wird. Dies kann deswegen besonders vorteilhaft sein, weil Wildtiere oft dazu neigen, unvermittelt stehen zu bleiben, wenn sie geblendet werden. Wird in dieser Situation das Wildtier nicht geblendet, so erhöht sich die Chance, dass es wieder die Fahrbahn verlässt. In dieser Situation kann das Beleuchtungssystem zusätzlich vorsehen, dass ein akustischer Warnton in Fahrtrichtung ausgegeben wird. Dies soll das Wildtier zum Verlassen der Fahrbahn anregen. Dieses Beispiel kann sinngemäß auch auf andere dynamische Objekte, beispielsweise spielenden Kindern übertragen werden. Der Fahrer des Kraftfahrzeugs erhält aufgrund der sich verkürzenden Lichtverteilung, die nicht über den Haltepunkt hinausragt, die intuitive Information den Haltepunkt nicht zu überfahren. Zugleich kann mittels des akustischen Warntons ein anderer Verkehrsteilnehmer zusätzlich gewarnt werden. Somit kann sich die Chance erhöhen, dass bei kritischen Verkehrssituationen sich kein Unfall ereignet.

In einer weiteren Variante der vorliegenden Erfindung weist das Informationssystem einen Radarsensor, einen Lidar-Sensor und/oder einen Ultraschallsensor auf. Je nach Einsatzzweck kann ein anderer Sensor vorgesehen sein. Ist eine größere Reichweite erwünscht, so wird häufig ein Radarsensor verwendet. Reicht jedoch eine kürzere Entfernung von beispielsweise wenigen Metern aus und soll zugleich eine höhere Auflösung als bei Radarsensoren bereitgestellt werden, werden oft Lidar-Sensoren eingesetzt. Ein Ultraschallsensor kann in der Regel einen Bereich von etwa drei Meter erfassen. Aufgrund seiner geringen Kosten wird ein Ultraschallsensor häufig eingesetzt.

In einer weiteren Variante der Erfindung ist vorgesehen, dass die einteilige Fläche ein Rechteck ist. Das Rechteck hat dabei insbesondere eine vorgegebene Breite. Diese Breite entspricht vorzugsweise entweder der Breite einer Fahrbahn, auf der sich das Kraftfahrzeug befindet, oder einer Breite des Kraftfahrzeugs selbst. Eine Länge des Rechtecks erstreckt sich insbesondere in eine Fahrtrichtung des Kraftfahrzeugs. Diese Variante der Erfindung ist vorzugsweise bei einem geradlinigen Fahrbahnverlauf vorgesehen. Es ist jedoch auch möglich, dass die berechnete Lichtverteilung mehrere einteilige Flächen als Rechtecke aufweist. Das heißt anstelle eines einheitlich wirkenden Lichtteppichs können zwei als Rechteck ausgebildete Lichtstreifen die berechnete Lichtverteilung darstellen. Rechteckige Flächen sind symmetrisch und von einem Fahrer des Kraftfahrzeugs besonders leicht wahrnehmbar.

Die Erfindung sieht vor, dass die Steuereinheit dazu ausgebildet ist, dass das Berechnen der Lichtverteilung auf die genannte Weise nur dann erfolgt, wenn eine Zusatzbedingung erfüllt ist. In manchen Situationen kann es sein, dass der Haltepunkt nicht als tatsächlicher Haltepunkt, sondern als ein potentieller Haltepunkt vorliegt. In diesem Fall ist es sinnvoll, den potentiellen Haltepunkt zu verifizieren. Da der potentielle Haltepunkt von seiner Natur aus noch nicht vollständig bestimmt ist, bedarf es weiterer Informationen, in diesem Fall der Zusatzbedingung, um den potentiellen Haltepunkt als tatsächlichen Haltepunkt zu bestätigen. Damit kann verhindert werden, dass ein Haltepunkt festgestellt wird, der gar nicht existiert. In einem solchen Fall wird die Lichtverteilung nicht fälschlicherweise auf den virtuellen Haltepunkt begrenzt. Aus Sicht des Fahrers, der das Kraftfahrzeug fährt, erscheint es, als ob sich die Lichtverteilung verkürzt. Eine Standardeinstellung des Beleuchtungssystems, die eine solche Verkürzung der Lichtverteilung nur bei einem tatsächlichen Haltepunkt vorsieht, könnte den Fahrer des Kraftfahrzeugs irritieren. Er könnte sich zum Beispiel veranlasst fühlen, eine Art Notbremsung einzuleiten, was für nachfolgende Kraftfahrzeuge gefährlich sein könnte. In dieser Variante der Erfindung wird dieser Zustand vermieden, da ein potentieller Haltepunkt nicht einfach so übernommen wird, sondern anhand der Zusatzbedingung verifiziert wird. Die Zusatzbedingung kann beispielsweise eine Oberflächenbeschaffenheit der Fahrbahn, lokale Wetterbedingungen, sich der Fahrbahn nähernde Objekte oder von dem Informationssystem bestimmte erkannte menschliche Gesten sein. Beispielsweise kann das Informationssystem oder die Steuereinheit anhand von Kamerabildern einen Polizisten erkennen, der aufgrund seiner Haltung zum Anhalten auffordert.

Gemäß dieser Erfindung ist vorgesehen, dass das Informationssystem dazu ausgebildet ist, eine vorgegebene Vorfahrtssituation für die Zusatzbedingung zu erkennen. In vielen Fällen wird die Zusatzbedingung durch eine Vorfahrtssituation vor Ort ermittelt. Nähert sich beispielsweise das Kraftfahrzeug einer Kreuzung mit einem Stoppschild, so bedeutet dies, dass der Fahrer auf jeden Fall anhalten muss. Das Stoppschild könnte zum Beispiel durch entsprechende Bildverarbeitungsalgorithmen erkannt werden. In einer bereitgestellten Logik können Verkehrszeichen, wie das Stoppschild, als Zusatzbedingung hinterlegt sein. In dieser Situation würde das Informationssystem das Stoppschild erkennen und darauf basierend einen Haltepunkt festlegen. Zuvor wäre der Haltepunkt aufgrund der Kreuzung noch nicht eindeutig bestimmt gewesen. Die Existenz der Kreuzung würde von dem Informationssystem als ein potentieller Haltepunkt bestimmt werden. Erst unter Einbeziehung der Zusatzbedingung würde in diesem Fall aus dem potentiellen Haltepunkt ein tatsächlicher Haltepunkt bestimmt werden. Damit kann das Informationssystem einen potentiellen Haltepunkt zu einem tatsächlichen Haltepunkt verifizieren. Würde sich das Kraftfahrzeug in dieser Situation der genannten Kreuzung auf der Vorfahrtsstraße nähern, so wäre die Zusatzbedingung nicht erfüllt. In diesem Fall würde keine Anpassung der Lichtverteilung erfolgen. Wenn in dieser Situation der Fahrer des Kraftfahrzeugs sich auf der Vorfahrtsstraße befinden würde, wäre dies auch nicht nötig und sinnvoll. Mithilfe einer bereitgestellten Logik kann die Steuereinheit oder das Informationssystem verschiedene vorgegebene Vorfahrtsituationen erkennen.

Eine weitere Variante der vorliegenden Erfindung sieht vor, dass mit dem Informationssystem ein Verkehrsschild, eine Schranke und/oder eine Kreuzung als der Haltepunkt erfassbar sind. Das Verkehrsschild kann beispielsweise ein Stoppschild, ein "Vorfahrt gewähren" Schild oder ein dynamisch ansteuerbares Schild sein, welches die jeweilige Fahrbahn als nicht vorfahrtsberechtigte Straße kennzeichnet. Die Schranke erstreckt sich vornehmlich senkrecht zur Fahrbahn des Kraftfahrzeugs auf einer vorgegebenen Höhe der Fahrbahn, um es zum Anhalten zu bewegen. Schranken werden beispielsweise bei Bahnübergängen, Mautstationen, Grenzübergängen oder Einfahrten zu Grundstücken eingesetzt. Dabei kann das Informationssystem eine als Zylinder geformte Schranke ebenso erkennen wie eine Schranke, deren Form eher einem Quader entspricht. Die Kreuzung kann in Form einer klassischen Kreuzung, in der zwei Straßenabschnitte sich im Winkel von etwa 90 Grad schneiden, vorliegen. Die Kreuzung kann ebenso als ein Kreisverkehr ausgestaltet sein. Auch Straßenabschnitte, die sich nicht rechtwinklig schneiden, können von dem Informationssystem als Kreuzung erkannt werden. Insbesondere kann das Informationssystem eine vorfahrtsberechtigte Hauptstraße erkennen, wenn das Kraftfahrzeug sich von einem Feldweg der Vorfahrtsstraße als eine Hauptstraße nähert.

Es ist vorgesehen, dass die Steuereinheit ausgebildet ist, bei mehreren durch das Informationssystem bereitgestellten Haltepunkten denjenigen Haltepunkt für das Berechnen der Lichtverteilung zu wählen, der von dem Startabschnitt am kürzesten entfernt ist. Unter gewissen Umständen können durch das Informationssystem mehrere potentielle Haltepunkte ermittelt werden. Dies kann beispielsweise dann der Fall sein, wenn sich das Kraftfahrzeug einer Kreuzung nähert und zugleich ein dynamisches Objekt vorhanden ist, welches sich der Fahrbahn nähert. Der vermutliche Eintrittsort des dynamischen Objekts auf die Fahrbahn würde in diesem Fall einen ersten potentiellen Haltepunkt darstellen, die Kreuzung würde je nach Vorfahrtssituation einen zweiten potentiellen Haltepunkt darstellen. Diese beiden potentiellen Haltepunkte können zusätzlich von einer jeweiligen Zusatzbedingung abhängig sein. Ermittelt das Informationssystem in diesem Fall zwei tatsächliche Haltepunkte, die verifiziert wurden, so wählt die Steuereinheit denjenigen Haltepunkt aus, der von dem Startabschnitt am kürzesten entfernt ist. Würde zum Beispiel ein Wildtier vor dem Eintreffen an einer Kreuzung die Fahrbahn queren, so würde die Lichtverteilung sich an dem Haltepunkt orientieren, der durch das Wildtier bestimmt wird. So kann gewährleistet werden, dass andere Objekte oder Verkehrsteilnehmer nicht unnötig geblendet werden. Diese Variante der Erfindung ermöglicht es, auch komplexe Situationen im Verkehrsgeschehen zu berücksichtigen. Die Lichtverteilung kann in Abhängigkeit von mehreren unterschiedlichen Verkehrssituationen angepasst werden.

Gemäß dieser Erfindung ist vorgesehen, dass das Informationssystem ausgebildet ist, für das Erkennen der Vorfahrtssituation ein Beobachten anderer Verkehrsteilnehmer durchzuführen. In gewissen Situationen kann es erforderlich sein, andere Verkehrsteilnehmer zu beobachten, um eine konkrete Vorfahrtssituation aufklären zu können. Nähert sich beispielsweise ein Fußgänger einem Zebrastreifen, so bestimmt das Informationssystem eine Bahnkurve des Fußgängers und kann damit entscheiden, ob der Fußgänger den Zebrastreifen überqueren wird. Dazu kann es erforderlich sein, den Fußgänger für eine gewisse Zeitspanne zu beobachten, um genügend Daten für das Berechnen seiner entsprechenden Bahnkurve zu erhalten. Um ein künftiges Verhalten des Fußgängers besser einschätzen zu können, kann insbesondere eine probabilistische Modellierung der vom Fußgänger aufgenommen Bilder durchgeführt werden. Dies wird von der Steuereinheit umgesetzt und so können mehrere Bahnkurven mit einer dazugehörigen Wahrscheinlichkeit ermittelt werden. Jene Bahnkurve mit der höchsten Wahrscheinlichkeit hinsichtlich eines Eintreffens des Fußgängers auf der Fahrbahn wird für das Bereitstellen des Haltepunktes berücksichtigt.

Die Bahnkurve des Fußgängers beschreibt insbesondere verschiedene Positionen des Fußgängers zu unterschiedlichen Zeitpunkten. Ergibt die Bahnkurve des Fußgängers zum Beispiel, dass dieser sich von dem Zebrastreifen entfernt, so ist eine entsprechende Zusatzbedingung für das Vorliegen eines Haltepunkts in diesem Fall nicht gegeben. Mittels entsprechender Bildverarbeitung wird bei einem Fußgänger das Gesicht insoweit untersucht, sodass eine Blickrichtung des Fußgängers festgestellt wird. Die Blickrichtung eines Fußgängers stellt einen wichtigen Indikator für eine Bewegungsrichtung des Fußgängers dar. Daher wird die Blickrichtung des Fußgängers für das Erkennen der Vorfahrtssituation berücksichtigt. Eine entsprechende Methode ließe sich analog bei Tieren anwenden.

In einer weiteren Variante der Erfindung ist vorgesehen, dass das Informationssystem eine Schnittstelle zum Empfangen von Umgebungsdaten anderer Kraftfahrzeuge aufweist. In diesem Fall können potentielle Haltepunkte, welche von anderen Kraftfahrzeugen festgestellt wurden, dem eigenen Kraftfahrzeug übermittelt werden. Diese von anderen Kraftfahrzeugen bereitgestellten potentiellen Haltepunkte können als eine Art prädiktive Streckendaten betrachtet werden. Erkennt beispielsweise ein vorausfahrendes anderes Kraftfahrzeug eine Ansammlung von Menschen auf der Fahrbahn, so kann dieses andere Kraftfahrzeug diese Situation dem eigenen Kraftfahrzeug als Information übermitteln. Die so von anderen Kraftfahrzeugen empfangenen Umgebungsdaten können für die Bestimmung eines Haltepunkts sowie für das Berechnen der Lichtverteilung berücksichtigt werden.

Die vorliegende Erfindung stellt ferner ein Scheinwerfersystem für ein Kraftfahrzeug mit einem Beleuchtungssystem zum Projizieren der Lichtverteilung auf den Fahrbahnabschnitt bereit. Das in den vorangegangenen Varianten beschriebene Beleuchtungssystem kommt vorzugsweise bei Kraftfahrzeugen zum Einsatz. Da mit dem Beleuchtungssystem eine Lichtverteilung auf der Fahrbahn projiziert werden soll, kann eine Integration des Beleuchtungssystems in ein bestehendes Scheinwerfersystem eines Kraftfahrzeugs sinnvoll sein. Es können jedoch auch separate Scheinwerfer für die Darstellung beziehungsweise die Projektion der Lichtverteilung auf dem Fahrbahnabschnitt vorgesehen sein. Die vorliegende Erfindung umfasst daher ebenfalls ein Kraftfahrzeug mit einem Scheinwerfersystem. Das Scheinwerfersystem ist vorzugsweise im vorderen Bereich des Kraftfahrzeugs angeordnet. Dabei ist der vordere Bereich eines Kraftfahrzeugs anhand einer vorgegebenen Hauptrichtung, in der sich das Kraftfahrzeug bewegt, vorgegeben. Die Scheinwerfer am Kraftfahrzeug sind vorzugsweise hochauflösende Scheinwerfer, die insbesondere jeweils mehrere hundert LED-Elemente aufweisen können.

Die vorliegende Erfindung stellt ebenfalls ein Verfahren zum Beleuchten eines Fahrbahnabschnitts für ein Kraftfahrzeug durch Ausführen folgender Verfahrensschritte bereit. Zunächst wird ein Haltepunkt bereitgestellt oder erfasst. Dies kann durch entsprechende Sensoren sowie durch ein Navigationssystem erfolgen. Der Haltepunkt wird bei einem Berechnen einer Lichtverteilung berücksichtigt. Dabei ist die berechnete Lichtverteilung eine einteilige Fläche. Sie beginnt von einem vorgegebenen Startabschnitt und breitet sich in Richtung des Haltepunktes aus. Der vorgegebene Startabschnitt stellt einen bezogen auf das Kraftfahrzeug proximalen Leuchtabschnitt dar. Die Lichtverteilung wird so berechnet, dass sie ausgehend von dem vorgegebenen Startabschnitt den Haltepunkt nicht überschreitet. Schließlich wird die berechnete Lichtverteilung auf den Fahrbahnabschnitt projiziert. Dazu kommen vorzugsweise ein Scheinwerfer oder ein Scheinwerfersystem mit mehreren Scheinwerfern zum Einsatz.

Die Erfindung wird nun anhand der beigefügten Zeichnungen näher erläutert.

Die Erfindung umfasst auch die Kombinationen der beschriebenen Ausführungsformen.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.
- Fig. 1: eine schematische Draufsicht auf ein Kraftfahrzeug mit einem Beleuchtungssystem, Lichtverteilung und Haltepunkt;
- Fig. 2: eine schematische Darstellung einer nicht erfindungsgemäßen Lichtverteilung bei Annäherung des Kraftfahrzeugs an eine Kreuzung; und
- Fig. 3: eine schematische Darstellung mehrerer Lichtverteilungen bei unterschiedlichen Verkehrssituationen.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

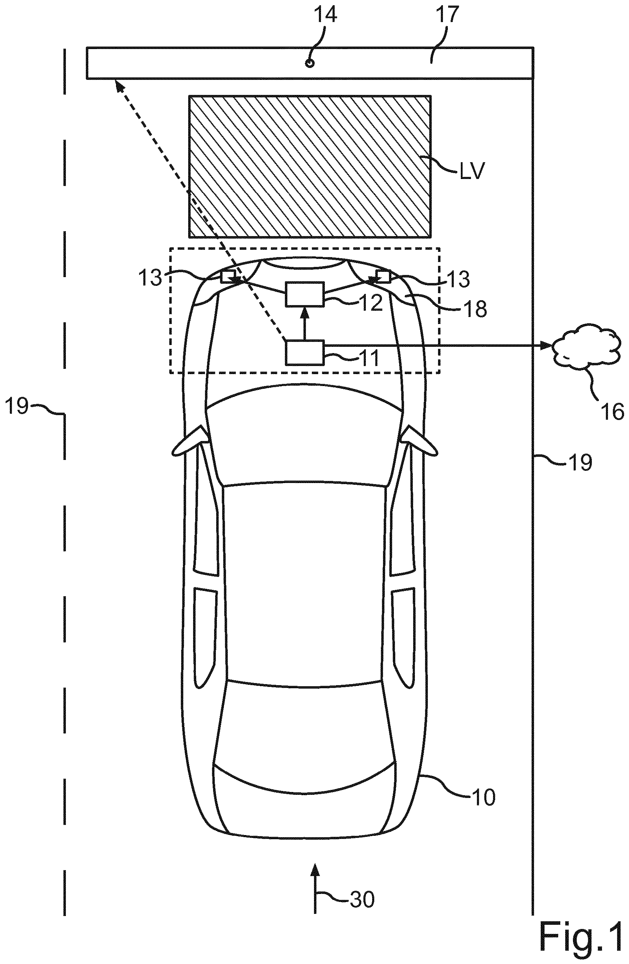

Fig. 1 zeigt beispielhaft ein Kraftfahrzeug 10, welches sich auf einer Fahrbahn 30 mit entsprechend vorgegebener Fahrtrichtung befindet. Diese Fahrbahn 30 ist durch entsprechende Fahrbahnmarkierungen 19 festgelegt. Das Kraftfahrzeug 10 beinhaltet ein Beleuchtungssystem 18. Das Beleuchtungssystem 18 weist mehrere Komponenten auf. Dazu zählen ein Informationssystem 11, eine Steuereinheit 12 sowie eine Beleuchtungseinrichtung 13. Das Navigationssystem 11 kann unterschiedliche Sensoren aufweisen, um die Umgebung des Kraftfahrzeugs 10 zu erfassen. Beispielsweise ist in Fig. 1 gezeigt, dass das Informationssystem 11 eine Haltemarkierung 17 erkennt. Diese Information kann das Informationssystem 11 der Steuereinheit 12 übermitteln. Die Übermittlung kann beispielsweise über ein Bussystem, insbesondere über ein CAN-Bussystem erfolgen.

Das Informationssystem 11 kann darüber hinaus auch auf einen externen Server 16 zugreifen. Der externe Server 16 kann weitere Informationen, die einen Haltepunkt 14 betreffen, bereitstellen. Diese Informationen können insbesondere prädiktive Streckendaten beinhalten. Die von dem externen Server 16 ermittelten beziehungsweise bereitgestellten Informationen kann das Informationssystem 11 an die Steuereinheit 12 übermitteln, damit die Steuereinheit 12 eine entsprechende Lichtverteilung LV berechnet. Die berechnete Lichtverteilung LV wird von den Beleuchtungseinrichtungen 13 des Kraftfahrzeugs 10 abgestrahlt. Sie wird vorzugsweise so abgestrahlt, dass vor dem Kraftfahrzeug eine einteilige Fläche beleuchtet wird. Dabei ist die einteilig beleuchtete Fläche der Lichtverteilung LV in Richtung der Fahrbahn 30 beschränkt. Sie reicht maximal bis zu dem Haltepunkt 14. Die Lichtverteilung LV kann jedoch, wie in diesem Beispiel gezeigt, bereits vor dem Haltepunkt 14 enden. Die Lichtverteilung kann beispielsweise etwa einen halben Meter vor dem Haltepunkt 14 enden.

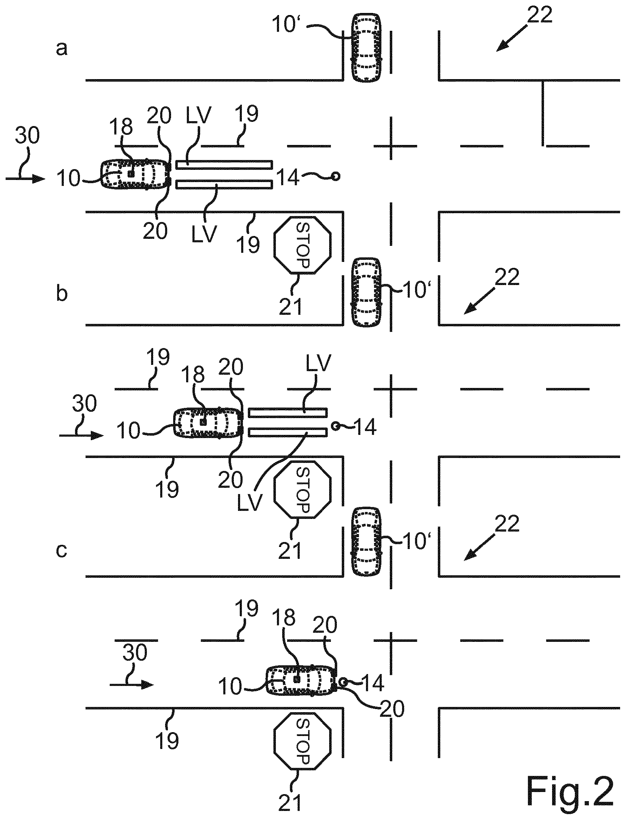

Fig. 2 zeigt beispielhaft wie die nicht erfindungsgemäße Lichtverteilung LV sich beim Annähern einer Kreuzung 22 anpasst. Das Kraftfahrzeug 10 befindet sich auf der Fahrbahn 30 mit der dazugehörigen Fahrbahnrichtung. Die Fahrbahn 30 endet in diesem Fall an der Kreuzung mit einem Verkehrszeichen 21. In diesem Fall ist das Verkehrszeichen 21 als ein Stoppschild ausgebildet. Die Kreuzung 22 könnte anhand prädiktiver Streckendaten bereits als potentieller Haltepunkt 14 vorgegeben sein. Mithilfe eines Kamerasystems als Teil des Informationssystems 11 kann das Stoppschild erkannt werden. Die Steuereinheit 12 oder das Informationssystem 11 können anhand der Informationen, welche in diesem Beispiel die Kreuzung 22 und das Stoppschild umfassen, den Haltepunkt 14 festlegen. Der Haltepunkt 14 liegt in diesem Beispiel in etwa dort, an der das Kraftfahrzeug 10 anhalten muss. Im Beispiel a der Fig. 2 ist das Kraftfahrzeug 10 noch so weit von der Kreuzung 22 entfernt, dass eine Anpassung der Lichtverteilung LV nicht notwendig ist. Die Lichtverteilung LV wird zwischen den entsprechenden Fahrbahnmarkierungen 19 anhand eines oder mehrerer Scheinwerfer 20 dargestellt. Die Darstellung der Lichtverteilung erfolgt dabei vorzugsweise auf der Fahrbahn 30.

Im Beispiel b der Fig. 2 hat sich das Kraftfahrzeug 10 der Kreuzung 22 bereits so weit angenähert, dass die Lichtverteilung LV bereits angepasst wurde. Die von den Scheinwerfern 20 abgestrahlte Lichtverteilung ist im Beispiel b bereits deutlich kürzer als im Beispiel A. Die Steuereinheit 12 steuert die Scheinwerfer 20 beziehungsweise die dazugehörigen Beleuchtungseinrichtungen 13 derart an, dass die Lichtverteilung LV auf der Fahrbahn 30 nicht über den Haltepunkt 14 hinausragt. Die Steuerung der Lichtverteilung LV erfolgt so, als ob am Haltepunkt 14 eine Wand wäre. Damit kann verhindert werden, dass die Lichtverteilung LV in den Bereich der Kreuzung 22 hineinleuchtet. Damit kann vermieden werden, dass andere Kraftfahrzeuge, wie zum Beispiel das Kraftfahrzeug 10' unnötig geblendet werden.

Im Beispiel c der Fig. 2 hat das Kraftfahrzeug 10 den Haltepunkt 14 erreicht und muss aufgrund des Stoppschilds anhalten. Da in diesem Fall insbesondere ein weiteres Kraftfahrzeug 10' auf der Vorfahrtsstraße fährt, ist ein Anhalten nicht nur eine Vorschrift, sondern in diesem Fall eine Notwendigkeit. Würde im Beispiel c der Fig. 2 die Lichtverteilung in die Kreuzung 22 hineinragen, so würde das andere Kraftfahrzeug 10' von der Lichtverteilung LV beleuchtet werden. Dies könnte zu einer Blendung des Fahrers des Kraftfahrzeugs 10' führen, was im schlimmsten Fall eine nicht vorhersehbare Reaktion des Fahrers bewirken kann. Der Fahrer des Kraftfahrzeugs 10' könnte sich durch den Lichteinfall der Lichtverteilung LV derart geblendet fühlen, dass dieser entweder abrupt abbremst oder das Lenkrad verreißen könnte. Aus diesem Grund ist im Beispiel c der Fig. 2 keine Lichtverteilung LV mehr vorhanden, da das Kraftfahrzeug 10 bereits den Haltepunkt 14 erreicht hat. Das heißt die Lichtverteilung LV hat im Beispiel der Fig. 2c eine Länge von null beziehungsweise die Lichtverteilung LV hat eine derart geringe Länge, sodass diese nicht in die Kreuzung 22 hineinragt. Wäre das Verkehrszeichen in Fig. 2 nicht als Stoppschild, sondern als Vorfahrtsschild ausgebildet, so wäre die Bestimmung des Haltepunkts 14 nicht von vornherein gegeben. In diesem Fall könnte die Steuereinheit 12 den Haltepunkt zusätzlich in Abhängigkeit von einer weiteren Zusatzbedingung festlegen beziehungsweise ermitteln.

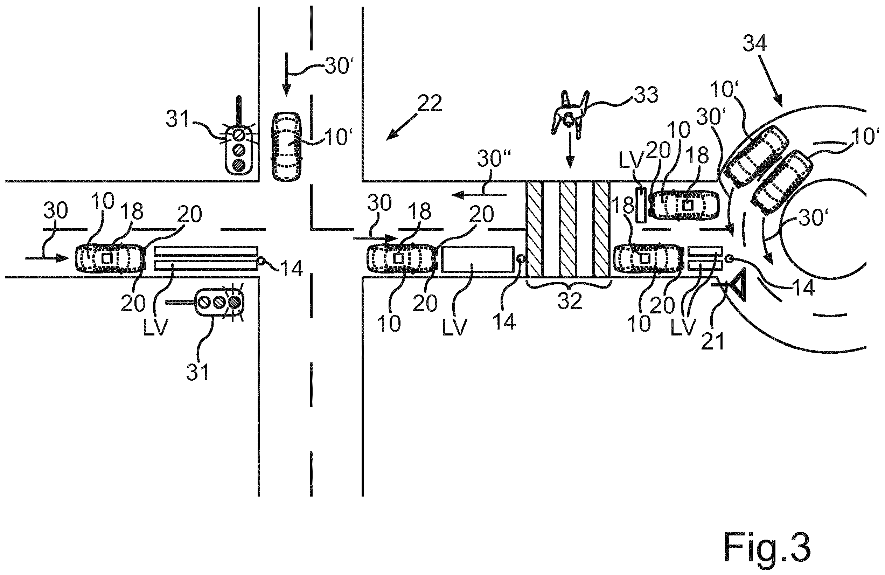

In Fig. 3 sind beispielhaft drei weitere Verkehrssituationen mit den dazugehörigen Lichtverteilungen LV gezeigt. Im linken Bereich der Fig. 3 nähert sich das Kraftfahrzeug der Kreuzung 22, welche in diesem Fall durch eine Ampel 31 gesteuert wird. Das heißt die Fahrbahn 30 des Kraftfahrzeugs 10 ist abwechselnd eine Vorfahrtsstraße und eine Nicht-Vorfahrtsstraße. Die Kreuzung 22 könnte beispielsweise anhand prädiktiver Streckendaten dem Informationssystem 11 oder der Steuereinheit 12 bekannt sein. Da die Ampel 31 jedoch eine dynamische Vorfahrtsregelung darstellt, hängt die konkrete Vorfahrtssituation an dieser Kreuzung 22 von dem Status der Ampel ab. In diesem Fall stellt das Beleuchtungssystem 18 mit dem darin enthaltenen Informationssystem 11 den Status der Ampel 31 fest. Beispielsweise kann mithilfe einer Kamera festgestellt werden, ob die Ampel 31 auf Grün, Rot oder Gelb steht. Eine mit der Kamera entsprechend verbundene Bildverarbeitung könnte beispielsweise anhand der Position der momentan aktiven Leuchte der Ampel 31 den aktuellen Status der Ampel 31 feststellen. Im Beispiel der Fig. 3 leuchtet die Ampel 31 so, dass das Kraftfahrzeug 10 anhalten muss. Das heißt die Ampel betreffend das Kraftfahrzeug 10 steht auf Rot. Das Vorliegen der Kreuzung 22 sowie des Status der Ampel 31 führen dazu, dass die Steuereinheit 12 den Haltepunkt 14 festlegt. In diesem Fall steuert die Steuereinheit 12 die Scheinwerfer 20 des Kraftfahrzeugs 10 so an, dass die nicht erfindungsgemäße

Lichtverteilung LV in Form von zwei Lichtstreifen nicht über den Haltepunkt 14 in die Kreuzung 22 hineinragt.

Im mittleren Bereich der Fig. 3 nähert sich das Kraftfahrzeug 10 einem Zebrastreifen 32. Auch in dieser Situation ist der Haltepunkt 14 nicht allein durch den Zebrastreifen 32 gegeben. Der Anhaltepunkt 14 hängt hier insbesondere davon ab, ob ein Fußgänger 33 den Zebrastreifen 32 überqueren möchte.

Ein Kamerasystem als Teil des Beleuchtungssystems 18 kann in diesem Fall den Fußgänger 33, der sich dem Zebrastreifen 32 nähert, erkennen. Daraus kann geschlossen werden, dass der Fußgänger 33 den Zebrastreifen 32 sowie die Fahrbahn 30 überqueren möchte. Anhand dieser Informationen kann die Steuereinheit 12 beziehungsweise das Informationssystem 11 den Haltepunkt 14 verifizieren. Der Zebrastreifen 32 würde einen potentiellen Haltepunkt festlegen, der aufgrund des sich nähernden Fußgängers 33 zu dem tatsächlichen Haltepunkt 14 verifiziert wird. Die Steuereinheit 12 steuert die Scheinwerfer 20 des Kraftfahrzeugs 10 so an, dass die erfindungsgemäße Lichtverteilung LV vor dem Haltepunkt 14 endet beziehungsweise nicht über ihn hinausragt. Damit kann eine Blendung des Fußgängers 33 unterbunden werden. Im Bereich des Zebrastreifens 32 ist ein weiteres Kraftfahrzeug 10 mit dem Beleuchtungssystem 18 gezeigt. In diesem Fall befindet sich das Kraftfahrzeug 10 auf der Fahrspur 30". Da das Kraftfahrzeug 10 in diesem Fall den Zebrastreifen 32 bereits erreicht hat, wurde die erfindungsgemäße Lichtverteilung LV in ihrer Länge so stark beschränkt, dass er vielmehr wie ein Strich anstelle eines Rechtecks wirkt. In diesem Fall wirkt die Lichtverteilung LV eher wie die Haltemarkierung 17.

Im rechten Bereich der Fig. 3 nähert sich das Kraftfahrzeug 10 auf der Fahrspur 30 einem Kreisverkehr 34. Dieser Kreisverkehr 34 weist im Inneren zwei Fahrspuren auf. Auf jeder dieser Fahrspuren befinden sich jeweils andere Kraftfahrzeuge 10', welche der Richtung 30' folgen. In diesem Fall ist vor dem Kreisverkehr 34 das Verkehrsschild 21 platziert. Das Verkehrsschild 21 ist hier als Vorfahrt gewähren Schild ausgebildet. Die Steuereinheit 12 kann beispielsweise so konzipiert sein, dass auch bei einem Vorfahrt gewähren Schild grundsätzlich der Haltepunkt 14 festgelegt wird. Man kann die Steuereinheit 12 auch derart ausgestalten, dass der Haltepunkt 14 erst nach Prüfung der konkreten Vorfahrtsituation festgelegt wird. Da ein "Vorfahrt gewähren Schild" nicht zwangsläufig ein Anhalten des Kraftfahrzeugs 10 erfordert, kann die Steuereinheit 12 in diesem Fall unterschiedlich agieren.

In diesem Beispiel würde der Haltepunkt 14 in beiden Fällen jedoch festgelegt werden, da das Kraftfahrzeug 10 wegen der anderen Kraftfahrzeuge 10' innerhalb des Kreisverkehrs 34 auf jeden Fall anhalten muss. Der Haltepunkt 14 führt dazu, dass die Steuereinheit die nicht erfindungsgemäße Lichtverteilung LV entsprechend ihrer Ausdehnung begrenzt. Je näher sich das Kraftfahrzeug 10 in dieser Situation dem Kreisverkehr 34 nähert, desto kürzer werden die dargestellten Lichtverteilungen LV. In diesem Fall sind die Lichtverteilungen LV als zwei separate rechteckige Streifen ausgebildet. Sie werden so angepasst, dass sie nicht über den Haltepunkt 14 hinaus in den Kreisverkehr 34 hineinragen. Damit kann eine Blendung des anderen Kraftfahrzeugs 10' wie im Beispiel der Kreuzung 22 vermieden werden.

Darüber hinaus kann das Informationssystem 11 weitere Fahrzeugsensoren aufweisen, welche Informationen über die Entfernung zu vorausfahrenden Kraftfahrzeugen bereitstellt. Die Steuereinheit 12 kann den Abstand zu einem vorausfahrenden Kraftfahrzeug für die Berechnung der Lichtverteilung berücksichtigen. So kann insbesondere die Lichtverteilung LV in ihrer Länge auf den Abstand zu dem vorausfahrenden Kraftfahrzeug beschränkt werden. Das Navigationssystem als Teil des Informationssystems 11 kann darüber hinaus anhand von GPS-Daten eine Entfernung zu der vorausliegenden Kreuzung 22, des vorausliegenden Zebrastreifens 32 oder Kreisverkehrs 34 bereitstellen. Diese Informationen werden an die Steuereinheit 12 vorzugsweise über ein Bussystem, zum Beispiel CAN-System, übermittelt. Die Steuereinheit 12 kann eine interne Logik aufweisen, mittels derer anhand mehrerer unterschiedlicher Parameter eine Vorfahrtssituation beziehungsweise eine Bedingung für den Haltepunkt 14 festgestellt werden kann. So führen beispielsweise die Informationen "grüne Ampel" und "Kreuzung" vorzugsweise zu keinem Haltepunkt 14, das Vorliegen des Zebrastreifens 32 in Kombination mit dem sich nähernden Fußgänger 33 ergibt jedoch vorzugsweise den in der Fig. 3 dargestellten Haltepunkt 14. Die Steuerung der jeweiligen Lichtverteilungen kann insbesondere dadurch erfolgen, indem jeder Lichtverteilung eine bestimmte Ausdehnung (Länge) zugeordnet ist. Damit kann die einteilige Fläche, welche die Lichtverteilung auf der Fahrbahn repräsentiert, so angepasst werden, dass diese den Haltepunkt 14 nicht überschreitet.

Die genannten Ausführungen und Beispiele zu dieser Erfindung zeigen, dass ein Spurlicht des Kraftfahrzeugs 10 in Abhängigkeit von verschiedenen Verkehrssituationen in der Länge angepasst werden kann. Dabei wird das Spurlicht insbesondere in seiner Länge derart beschränkt, dass eine Blendung anderer Verkehrsteilnehmer reduziert, idealerweise ausgeschlossen wird. Das Informationssystem 11 kann dabei mehrere verschiedene Verkehrssituationen erfassen sowie analysieren. Mithilfe einer bereitgestellten Logik können die Bedingungen für das Erfassen des Haltepunkts 14 flexibel eingestellt werden. Damit ist es möglich, das Verkürzen des Spurlichts des Kraftfahrzeugs 10 den jeweiligen Verkehrsregeln eines Landes anzupassen. Die in dieser Anmeldung dargestellten Beispiele richten sich vornehmlich darauf, Irritationen anderer Verkehrsteilnehmer zu vermeiden, was zur Erhöhung der Verkehrssicherheit beitragen kann.

## Patentansprüche

1. Beleuchtungssystem (18) für ein Kraftfahrzeug (10) zum Beleuchten eines Fahrbahnabschnitts mit
- einem Informationssystem (11) zum Bereitstellen oder Erfassen eines Haltepunkts (14), an dem das Kraftfahrzeug (10) anhalten muss, wobei das Informationssystem (11) eine Kamera zum Erfassen von Umgebungsdaten und ein Navigationssystem zum Bereitstellen von prädiktiven Streckendaten bezüglich des Haltepunkts (14) aufweist, und wobei das Informationssystem (11) dazu ausgebildet ist, eine vorgegebene Vorfahrtssituation für eine Zusatzbedingung zum Verifizieren des Haltepunkts (14) zu erkennen und für das Erkennen der Vorfahrtssituation ein Beobachten anderer Verkehrsteilnehmer durchzuführen,
- einer Beleuchtungseinrichtung (13) zum Projizieren einer berechneten Lichtverteilung (LV) auf dem Fahrbahnabschnitt sowie
- einer Steuereinheit (12) zum Berechnen der Lichtverteilung (LV), wobei
- die berechnete Lichtverteilung (LV) eine einteilige Fläche ist, welche ausgehend von einem vorgegebenen Startabschnitt, der einen bezogen auf das Kraftfahrzeug (10) proximalen Leuchtabschnitt darstellt, den Haltepunkt (14) nicht überschreitet und
- die Steuereinheit (12) ausgebildet ist,
- dass das Berechnen der Lichtverteilung (LV) auf die genannte Weise nur dann erfolgt, wenn die Zusatzbedingung erfüllt ist, wobei die Zusatzbedingung ein Eintreffen eines Fußgängers auf einer Fahrbahn beinhaltet,
- mithilfe mehrerer durch das Informationssystem (11) bestimmter Bahnkurven des Fußgängers je eine dazugehörige Wahrscheinlichkeit hinsichtlich des Eintreffens des Fußgängers auf der Fahrbahn zu ermitteln,
- mittels einer Bildverarbeitung ein Gesicht des Fußgängers zum Feststellen einer Blickrichtung des Fußgängers als ein Indikator für eine Bewegungsrichtung des Fußgängers zu untersuchen und die Blickrichtung des Fußgängers für das Erkennen der Vorfahrtssituation zu berücksichtigen,
- jene Bahnkurve mit der höchsten Wahrscheinlichkeit für das Bereitstellen des Haltepunkts (14) zu berücksichtigen und
- bei mehreren durch das Informationssystem (11) bereitgestellten Haltepunkten (14), denjenigen Haltepunkt (14) für das Berechnen der Lichtverteilung (LV) zu wählen, der von dem Startabschnitt am kürzesten entfernt ist.

2. Beleuchtungssystem (18) nach einem der vorhergehenden Ansprüche, wobei das Informationssystem (11) einen Radarsensor, einen Lidar-Sensor und/oder einen Ultraschallsensor aufweist.

3. Beleuchtungssystem (18) nach einem der vorhergehenden Ansprüche, wobei die einteilige Fläche ein Rechteck ist.

4. Beleuchtungssystem (18) nach einem der vorhergehenden Ansprüche, wobei mit dem Informationssystem (11) ein Verkehrsschild (21), eine Schranke und/oder eine Kreuzung (22) als der Haltepunkt (14) erfassbar sind.

5. Beleuchtungssystem (18) nach einem der vorhergehenden Ansprüche , wobei das Informationssystem (11) eine Schnittstelle zum Empfangen von Umgebungsdaten anderer Kraftfahrzeuge (10') aufweist.

6. Scheinwerfersystem für ein Kraftfahrzeug (10) mit einem Beleuchtungssystem (18) nach einem der vorhergehenden Ansprüche zum Projizieren der Lichtverteilung (LV) auf den Fahrbahnabschnitt.

7. Kraftfahrzeug (10) mit einem Scheinwerfersystem nach Anspruch 6.

8. Verfahren zum Beleuchten eines Fahrbahnabschnitts für ein Kraftfahrzeug (10) durch Ausführen folgender Verfahrensschritte:
- Bereitstellen oder Erfassen eines Haltepunkts (14), an dem das Kraftfahrzeug (10) anhalten muss, wobei eine vorgegebene Vorfahrtsituation für eine Zusatzbedingung zum Verifizieren des Haltepunkts (14) erkannt wird,
- Beobachten anderer Verkehrsteilnehmer für das Erkennen der Vorfahrtsituation,
- Untersuchen eines Gesichts eines Fußgängers und Feststellen einer Blickrichtung des Fußgängers als ein Indikator einer Bewegungsrichtung des Fußgängers mittels einer Bildverarbeitung, wobei die Blickrichtung des Fußgängers für das Erkennen der Vorfahrtssituation berücksichtigt wird,
- Berechnen einer Lichtverteilung (LV), wobei die berechnete Lichtverteilung (LV) eine einteilige Fläche ist, welche ausgehend von einem vorgegebenen Startabschnitt, der einen bezogen auf das Kraftfahrzeug (10) proximalen Leuchtabschnitt darstellt, den Haltepunkt (14) nicht überschreitet, wobei
- das Berechnen der Lichtverteilung (LV) auf die genannte Weise nur dann erfolgt, wenn die Zusatzbedingung erfüllt ist und die Zusatzbedingung ein Eintreffen eines Fußgängers auf einer Fahrbahn beinhaltet,
- mithilfe mehrerer Bahnkurven des Fußgängers je eine dazugehörige Wahrscheinlichkeit hinsichtlich des Eintreffens des Fußgängers auf der Fahrbahn ermittelt wird, und
- jene Bahnkurve mit der höchsten Wahrscheinlichkeit für das Bereitstellen des Haltepunkts (14) berücksichtigt wird,
- Auswählen bei mehreren durch das Informationssystem (11) bereitgestellten Haltepunkten (14) desjenigen Haltepunkts (14) für das Berechnen der Lichtverteilung (LV), der von dem Startabschnitt am kürzesten entfernt ist,
- Projizieren der berechneten Lichtverteilung (LV) auf den Fahrbahnabschnitt.

## Claims

1. An illumination system (18) for a motor vehicle (10) for illuminating a roadway section, comprising
- an information system (11) for providing or capturing a stop point (14), at which the motor vehicle (10) has to stop, wherein the information system (11) comprises a camera for capturing environmental data and a navigation system for providing predictive route data with respect to the stop point (14), and wherein the information system (11) is formed to recognize a preset right of way situation for an additional condition for verifying the stop point (14) and to perform observation of other traffic participants for recognizing the right of way situation,
- an illumination device (13) for projecting a calculated light distribution (LV) onto the roadway section, as well as
- a control unit (12) for calculating the light distribution (LV),
wherein
- the calculated light distribution (LV) is a one-piece area, which does not exceed the stop point (14) starting from a preset start section, which represents a lighting section proximal related to the motor vehicle (10), and
- the control unit (12) is formed
- in that the calculation of the light distribution (LV) in the mentioned manner is only effected if the additional condition is satisfied, wherein the additional condition includes arrival of a pedestrian on a roadway,
- with the aid of multiple trajectories of the pedestrian determined by the information system (11), to ascertain each one associated probability with respect to the arrival of the pedestrian on the roadway,
- to examine a face of the pedestrian for determining a viewing direction of the pedestrian as an indicator for a direction of movement of the pedestrian by means of image processing and to consider the viewing direction of the pedestrian for recognizing the right of way situation,
- to consider that trajectory with the highest probability for providing the stop point (14), and
- with multiple stop points (14) provided by the information system (11), to select that stop point (14) for calculating the light distribution (LV), which is at the shortest distance from the start section.

2. The illumination system (18) according to any one of the preceding claims, wherein the information system (11) comprises a radar sensor, a lidar sensor and/or an ultrasonic sensor.

3. The illumination system (18) according to any one of the preceding claims, wherein the one-piece area is a rectangle.

4. The illumination system (18) according to any one of the preceding claims, wherein a traffic sign (21), a boom gate and/or a crossroads (22) can be captured as the stop point (14) with the information system (11).

5. The illumination system (18) according to any one of the preceding claims, wherein the information system (11) comprises an interface for receiving environmental data of other motor vehicles (10').

6. A headlight system for a motor vehicle (10) with an illumination system (18) according to any one of the preceding claims for projecting the light distribution (LV) onto the roadway section.

7. A motor vehicle (10) with a headlight system according to claim 6.

8. A method for illuminating a roadway section for a motor vehicle (10) by executing the following method steps:
- providing or capturing a stop point (14), at which the motor vehicle (10) has to stop, wherein a preset right of way situation is recognized for an additional condition for verifying the stop point (14),
- observing other traffic participants for recognizing the right of way situation,
- examining a face of a pedestrian and determining a viewing direction of the pedestrian as an indicator of a direction of movement of the pedestrian by means of image processing, wherein the viewing direction of the pedestrian is considered for recognizing the right of way situation,
- calculating a light distribution (LV), wherein the calculated light distribution (LV) is a one-piece area, which does not exceed the stop point (14) starting from a preset start section, which represents a lighting section proximal related to the motor vehicle (10), wherein
- the calculation of the light distribution (LV) in the mentioned manner is only effected if the additional condition is satisfied and the additional condition includes arrival of a pedestrian on a roadway,
- with the aid of multiple trajectories of the pedestrian, each one associated probability with respect to the arrival of the pedestrian on the roadway is ascertained, and
- that trajectory with the highest probability is considered for providing the stop point (14),
- with multiple stop points (14) provided by the information system (11), selecting that stop point (14) for calculating the light distribution (LV), which is at the shortest distance from the start section,
- projecting the calculated light distribution (LV) onto the roadway section.

## Revendications

1. Système d'éclairage (18) pour un véhicule à moteur (10) destiné à éclairer une portion de chaussée, comportant :
- un système d'information (11) pour fournir ou détecter un point d'arrêt (14) auquel le véhicule à moteur (10) doit s'arrêter, le système d'information (11) comportant une caméra pour détecter des données sur l'environnement et un système de navigation pour fournir des données de trajet prédictives par rapport au point d'arrêt (14), et le système d'information (11) étant configuré pour identifier une situation de priorité prédéfinie pour une condition supplémentaire afin de vérifier le point d'arrêt (14) et pour effectuer une observation d'autres usagers de la route afin d'identifier la situation de priorité,
- un dispositif d'éclairage (13) pour projeter une répartition lumineuse (LV) calculée sur la portion de chaussée ainsi que
- une unité de commande (12) pour calculer la répartition lumineuse (LV),
- la répartition lumineuse (LV) calculée étant une surface monobloc qui, en partant d'une portion de départ prédéfinie représentant une portion lumineuse proximale par rapport au véhicule à moteur (10), ne franchit pas le point d'arrêt (14),
- l'unité de commande (12) étant configurée pour :
- calculer la répartition lumineuse (LV) de la façon indiquée uniquement lorsque la condition supplémentaire est satisfaite, la condition supplémentaire étant une arrivée d'un piéton sur une chaussée,
- déterminer, au moyen de plusieurs trajectoires du piéton établies par le système d'information (11), une probabilité associée concernant l'arrivée du piéton sur la chaussée,
- examiner, par un traitement d'image, un visage du piéton afin d'établir une direction du regard du piéton en tant qu'indicateur d'une direction de déplacement du piéton, et tenir compte de la direction du regard du piéton afin d'identifier la situation de priorité,
- pour la fourniture du point d'arrêt (14), prendre en compte la trajectoire ayant la plus grande probabilité et
- lorsque plusieurs points d'arrêt (14) sont fournis par le système d'information (11), sélectionner, pour le calcul de la répartition lumineuse (LV), le point d'arrêt (14) qui est le plus proche de la portion de départ.

2. Système d'éclairage (18) selon l'une des revendications précédentes, dans lequel le système d'information (11) comporte un capteur radar, un capteur lidar et/ou un capteur à ultrasons.

3. Système d'éclairage (18) selon l'une des revendications précédentes, dans lequel la surface monobloc est un rectangle.

4. Système d'éclairage (18) selon l'une des revendications précédentes, dans lequel un panneau de signalisation (21), une barrière et/ou un carrefour (22) peuvent être détectés en tant que point d'arrêt (14) avec le système d'information (11).

5. Système d'éclairage (18) selon l'une des revendications précédentes, dans lequel le système d'information (11) comporte une interface pour recevoir des données sur l'environnement d'autres véhicules à moteur (10').

6. Système de phares pour un véhicule à moteur (10) comportant un système d'éclairage (18) selon l'une des revendications précédentes pour projeter la répartition lumineuse (LV) sur la portion de chaussée.

7. Véhicule à moteur (10) comportant un système de phares selon la revendication 6.

8. Procédé pour éclairer une portion de chaussée pour un véhicule à moteur (10) en réalisant les étapes de procédé suivantes :
- fournir ou détecter un point d'arrêt (14) auquel le véhicule à moteur (10) doit s'arrêter, une situation de priorité prédéfinie étant identifiée pour une condition supplémentaire afin de vérifier le point d'arrêt (14),
- observer d'autres usagers de la route afin d'identifier la situation de priorité,
- examiner, par un traitement d'image, un visage d'un piéton et établir une direction du regard du piéton en tant qu'indicateur d'une direction de déplacement du piéton, la direction du regard du piéton étant prise en compte afin d'identifier la situation de priorité,
- calculer une répartition lumineuse (LV), la répartition lumineuse (LV) calculée étant une surface monobloc qui, en partant d'une portion de départ prédéfinie représentant une portion lumineuse proximale par rapport au véhicule à moteur (10), ne franchit pas le point d'arrêt (14),
- le calcul de la répartition lumineuse (LV) ne pouvant être effectué de la façon indiquée que lorsque la condition supplémentaire est satisfaite et la condition supplémentaire étant une arrivée d'un piéton sur une chaussée,
- déterminer, au moyen de plusieurs trajectoires du piéton, une probabilité associée concernant l'arrivée du piéton sur la chaussée, et
- pour la fourniture du point d'arrêt (14), tenir compte de la trajectoire ayant la plus grande probabilité,
- lorsque plusieurs points d'arrêt (14) sont fournis par le système d'information (11), sélectionner, pour le calcul de la répartition lumineuse (LV), le point d'arrêt (14) qui est le plus proche de la portion de départ,
- projeter la répartition lumineuse (LV) calculée sur la portion de chaussée.
